# EUROPÄISCHE PATENTSCHRIFT

(11) **EP 0 861 387 B1**
(45) Veröffentlichungstag und Bekanntmachung des Hinweises auf die Patenterteilung: **22.03.2000**
(21) Anmeldenummer: 96939848.6
(22) Anmeldetag: 19.11.1996
(51) Int. Cl.: F16G 13/16

(54) **KETTENGLIED EINER ENERGIEFÜHRUNGSKETTE MIT ZUSATZKÖRPER**
CHAIN LINK OF A POWER TRANSMISSION CHAIN WITH ADDITIONAL ELEMENT
MAILLON D'UNE CHAINE DE TRANSMISSION D'ENERGIE AVEC ELEMENT ADDITIONNEL

(30) Priorität: 01.12.1995 DE 19544931
(43) Veröffentlichungstag der Anmeldung: 02.09.1998
(73) Patentinhaber: Kabelschlepp Gesellschaft mit beschränkter Haftung, 57074 Siegen (DE)
(72) Erfinder: WEBER, Willibald, D-51250 Netphen (DE); WEHLER, Herbert, D-51290 Neunkirchen (DE)
(74) Vertreter: Kahlhöfer, Hermann, Dipl.-Phys.
(86) Internationale Anmeldenummer: EP9605097
(87) Internationale Veröffentlichungsnummer: WO9721048

(56) Entgegenhaltungen:
- DE-A- 1 932 428
- DE-A- 2 020 107
- DE-A- 2 221 826
- DE-A- 2 357 908
- DE-A- 2 415 374
- DE-A- 3 806 400
- DE-B- 1 250 711
- DE-B- 1 775 053
- GB-A- 982 347
- US-A- 5 016 841
- MACHINERY AND PRODUCTION ENGINEERING, Bd. 124, Nr. 3200, 27.März 1974, BURGESS HILL, GB, Seiten 367-368, XP002024949 "Glacetal reduces friction in powerloop dragchains"

## Beschreibung

Die vorliegende Erfindung betrifft ein Kettenglied für eine Energieführungskette. Insbesondere liegt das Anwendungsgebiet der Erfindung bei Kettengliedern für eine Energieführungskette, deren sich aufeinander drehende Gleitflächen benachbarter Kettenglieder jeweils aus unterschiedlichem Material bestehen.

Der Einsatz verschiedener Materialien bei Kettengliedern einer Energieführungskette ist bekannt. In der DE-OS 22 21 826 werden Kettenelemente beschrieben, die für eine Herstellung im Kunststoff- oder Metallspritzgußverfahren geeignet sind. Gemäß der DE-OS 24 15 374 werden die äußeren Breitseiten der Vorsprünge und/oder die inneren Breitseiten der Vertiefungen einer Energieführungskette mit einem Gleitmaterial versehen. Als vorteilhaft dafür wird eine Kunststoffbeschichtung genannt. In der DE 38 06 400 werden die Seitenwände eines Kettengliedes abwechselnd aus zwei verschiedenen thermoplastischen Kunststoffen ausgeführt, die gegeneinander niedrigere Abriebwerte besitzen als Paarungen aus jeweils gleichem Kunststoff. In der englischen Patentschrift 982 347 wird eine Lagerung dargestellt, bei der die aufeinandergleitenden Flächen aus unterschiedlichem Kunststoff bestehen.

Weiterhin ist es im Stand der Technik bekannt, eine Energieführungskette aus mehrteiligen Kettengliedern zusammenzusetzen. Die DE 17 75 053 C2 beispielsweise offenbart eine Schleppkette für Leitungen, die aus abwechselnd miteinander verbundenen Kettenlaschenpaaren und einzelnen Kettenlaschen gebildet wird. In einer einzelnen Kettenlasche sitzt eine Kugel, die in Pfannen des benachbarten Kettenlaschenpaares so gelagert ist, daß das Kettenlaschenpaar mit der einzelnen Kettenlasche gelenkig miteinander verbunden ist. Zwischen dem Kettenlaschenpaar und der einzelnen Kettenlasche sind an den Seitenwänden Gleitzwischenlagen angeordnet, die zum einen eine möglichst exakte Abdichtung der Kugellagerung erzielen sollen und zum anderen durch geeignete Bemessung der Öffnung zur Halterung der Kugel während des Zusammenbaus dienen. Weiterhin sind Buchsen beschrieben, die auf der Längsachse des Kettenlaschenpaares sitzen und einen Formschluß zwischen dem Kettenlaschenpaar und der benachbarten einzelnen Kettenlasche herstellen.

Eine weitere Schrift, die DE-PS 12 50 711, offenbart ein Gliederband für Energieführungsketten, dessen Biegeradius zwischen den Kettengliedern mittels auswechselbarer Anschlagstücke begrenzt wird. Die dort dargestellte Buchse, die einen Gelenkbolzen umgibt, bietet den benachbarten Kettengliedern die Gleitfläche, auf der sie ihre Relativbewegung zueinander ausführen. Die Buchse wird durch jeweils eine seitliche Scheibe an ihrer Stirnseite gegenüber den Außenseiten eines Kettengliedes abgedeckt.

Eine weitere Gelenkkette wird in der DE 23 57 908 beschrieben, bei der in einander gegenüberliegenden Laschen von benachbarten Kettengliedern sich Lagerschalen befinden, in denen Laufkugeln eingeschlossen werden, die eine Wälzlagerung der Kettenglieder ausbilden. Diese Wälzlagerung ist mit einem Radius beabstandet vom Mittelpunkt der gelenkigen Verbindung zweier Kettenglieder einer Gliederkette angeordnet. Die Laschen von zwei benachbarten Kettengliedern werden wiederum durch eine Buchse zentriert, wobei zwei kreisförmige Stützscheiben die Laschen der Kettenglieder sowie die Buchse zusammenhalten.

Aus der DE 2 020 107, die die Merkmalskombinationen des Oberbegriffs der unabhängigen Ansprüche 1 und 10 offenbart, ist eine Gliederkette bekannt, bei dem ein Kettenglied zweistrangig aufgebaut ist. Jeder Strang weist zwei voneinander beabstandete Seitenwände auf, die an ihrer einen Stirnseite einen Gelenkvorsprung und an der dieser entgegengesetzten Stirnseite eine Gelenkausnehmung haben. An diese Stirnseiten können entsprechend angepaßte Seitenwände eines benachbarten Kettengliedes über eine Scheibe angeschlossen werden. Diese Scheibe ragt in den jeweiligen Strang der benachbarten Kettenglieder hinein, wobei sie an dem einen Strang beispielsweise mittels Punktschweißung befestigt ist. Der andere Strang ist mit der Scheibe über einen in dieser mittig eingesetzten Gelenkbolzen verbunden, um den die so benachbarten Kettenglieder ihre Drehbewegung ausführen. Die Kettenglieder und der Gelenkbolzen bestehen vorzugsweise aus Stahl, die Scheibe aus einem Kunstoff mit geringem Reibungskoeffizienten.

Aufgabe der vorliegenden Erfindung ist es nun, Verschleiß und/oder Reibung in den Gelenken einer Gliederkette, insbesondere einer Energieführungskette zu verringern, ohne die mechanische Festigkeit der Kettenglieder herabzusetzen, wobei ein unkompliziertes Zusammensetzen der Kettenglieder gewährleistet sein soll.

Diese Aufgabe wird durch ein Verfahren zur Herstellung eines Kettengliedes für eine Energieführungskette mit den Merkmalen des Anspruchs 1 sowie durch ein Kettenglied mit den Merkmalen des Anspruches 10 gelöst. Vorteilhafte Ausgestaltungen und Weiterbildungen sind in den abhängigen Ansprüchen angegeben. Weitere günstige Ausführungsformen ergeben sich durch Kombinationen der in den Ansprüchen und der Beschreibung offenbarte Merkmale.

Ein erfindungsgemäßes Kettenglied für eine Energieführungskette zeichnet sich dadurch aus, daß vor dem Zusammenbau der Energieführungskette 1 mindestens einer Seitenwand 3 ein zusätzlicher Körper 5; 6 angefügt wird, der aus einem anderen Material als das der Seitenwand 3 besteht und mindestens einen Teil der aufeinander drehenden Gleitflächen bildet.

Die Erfindung weist in eine neue Richtung der Herstellung von Energieführungsketten. Die einzelnen Kettenglieder sind schon vor dem Zusammenbau der Energieführungskette separat mit den später jeweils aufeinandergleitenden Gleitflächen hergestellt. Beim Zusammenbau der Energieführungskette muß nun nicht mehr zumindest eins von zwei miteinander zu verbindenden Kettengliedern zusammengebaut werden. Der Aufwand beim Zusammensetzen der Energieführungskette aus den einzelnen fertigen Kettengliedern ist daher sehr gering und erlaubt daher insbesondere ein automatisiertes Montageverfahren.

Durch das zusätzliche Anfügen eines Körpers an das Kettenglied entsteht die Möglichkeit, alle anderen Bauteile für eine Gliederkette, wie Kettengliedkörper, -seitenwand oder -quersteg aus nur einem hochbelastbaren Material herzustellen und gleichzeitig günstige Gleit- und/oder Verschleißeigenschaften durch den angefügten Körper zu erreichen. Zum einen kann also ein der Aufgabe des Bauteiles gemäßes Grund-Material gewählt werden, ohne Verzicht auf gute Gelenkeigenschaften. Zum anderen ergibt sich bei einer eventuellen späteren Entsorgung der Kettenglieder eine vorteilhafte einfache Trennung bezüglich der unterschiedlichen Materialien. Weiterhin wird durch diesen Aufbau einer Gliederkette eine Austauschbarkeit beschädigter Bauteile erleichtert. Der an ein Kettenglied zusätzlich angefügte Körper unterliegt beim Betrieb insbesondere einem Verschleiß durch Reibung. Bei geeigneter Ausführung ist es möglich, den angefügten Körper einzeln auszutauschen. Durch das Anfügen eines oder mehrerer Körper an einem Kettenglied besteht die Möglichkeit, den Reibverschleiß beim Betrieb gezielt zu verringern und auf bestimmte Teile zu begrenzen.

Die Herstellung eines Kettengliedes wird durch vorteilhafte Gestaltung des angefügten Körpers vereinfacht. Eine Nachbearbeitung zur Herstellung von geeigneten Gleitflächen am Kettenglied kann durch die Übertragung der Aufgabe der Schaffung einer Gleitfläche auf den angefügten Körper eingespart werden. Jeweils benachbarte Kettenglieder mit angefügtem Körper werden z. B. über eine Schnappverbindung zusammengehalten. Vorteilhafterweise verschließt der zusätzlich angefügte Körper die bewegliche Verbindung ebenfalls. Dazu kann ein Teil des Körpers die Aufgabe eines Riegels übernehmen. Eine günstige Ausführungsform eines zusätzlich angefügten Körpers ist daher ein Zapfen mit einem Kragen. Der Kragen hat die Funktion eines Anschlages an die Seitenwand des Kettengliedes. Der Zapfen kann an seinem anderen, dem Kragen entgegengewandten Ende als Schnappverschluß ausgeformt sein. Grundsätzlich kann die vorliegende Erfindung auf fast alle bekannten Bauformen von Energieführungsketten angewandt werden, indem bisher verwendete Gleitflächen, insbesondere Zapfen, Buchsen, Langlöcher und dergleichen durch angefügte Körper ausgebildet werden.

Als Materialien für den zusätzlich angefügten Körper bieten sich je nach Einsatzzweck gehärteter Stahl oder andere metallische Werkstoffe an. Ebenso ist es auch möglich, den Körper aus Kunststoff herzustellen. Bezüglich günstiger Gleiteigenschaften bietet sich dann eine Herstellung aus schmierstoffgefülltem oder auch gleitstoffgefülltem Kunststoff an. Ebenso kann der Körper auch ganz oder teilweise aus Keramik hergestellt oder auch beschichtet sein. Die Wahl des Werkstoffes bezüglich des Kettengliedes ist somit nicht festgelegt. Günstig ist jedoch die Verwendung eines glasfaserverstärkten Polyamids. Dieser Werkstoff ist in der Lage, Zugkräfte günstig aufnehmen zu können. Die Bearbeitung von glasfaserverstärktem Polyamid zu einem Kettenglied läßt außerdem viele Gestaltungsmöglichkeiten des Kettengliedes offen. Jedenfalls sollte die Materialpaarung des angefügten Körpers mit darauf oder darin gleitenden Flächen gute Gleit-, Verschleiß- und/oder Laufeigenschaften haben.

Das Einbringen des zusätzlich hinzugefügten Körpers an ein Kettenglied hängt unter anderem von dem Material des Kettengliedes ab. Eine Schraubverbindung ist ebenso möglich wie ein Ein- und/oder Aufpressen des Körpers oder andere Verbindungstechniken. Kraft- und/oder formschlüssige Verbindungen können je nach Montageaufwand von Körper und Kettenglied und Einsatzart der Energieführungskette gewählt werden.

Weitere Vorteile und Eigenschaften der Erfindung werden anhand von Ausführungsbeispielen in der folgenden Zeichnungen erläutert. Die Erfindung ist auf die dargestellten bevorzugten Ausführungsbeispiele des erfindungsgemäßen Verfahrens bzw. Vorrichtung nicht beschränkt. Es zeigen:
- Fig. 1: das Anbringen eines zusätzlich angefügten Körpers in Buchsenform an ein Kettenglied für eine Energieführungskette,
- Fig. 2: eine Seitenansicht der Energieführungskette aus Fig. 1,
- Fig. 3: einen senkrechten Schnitt durch die aufeinander drehenden Gleitflächen einer Verbindung von Kettengliedern untereinander aus Fig. 1,
- Fig. 4: das Anbringen eines zusätzlich angefügten Körpers in Zapfenform an ein Kettenglied für eine Energieführungskette,
- Fig. 5: einen senkrechten Schnitt durch die aufeinander drehenden Gleitflächen einer Verbindung von Kettengliedern untereinander aus Fig. 4,
- Fig. 6: das Anbringen zweier zusätzlich angefügter Körper in jeweils Buchsen- und Zapfenform an ein Kettenglied für eine Energieführungskette und
- Fig. 7: einen senkrechten Schnitt durch die aufeinander drehenden Gleitflächen einer Verbindung von Kettengliedern untereinander aus Fig. 6.

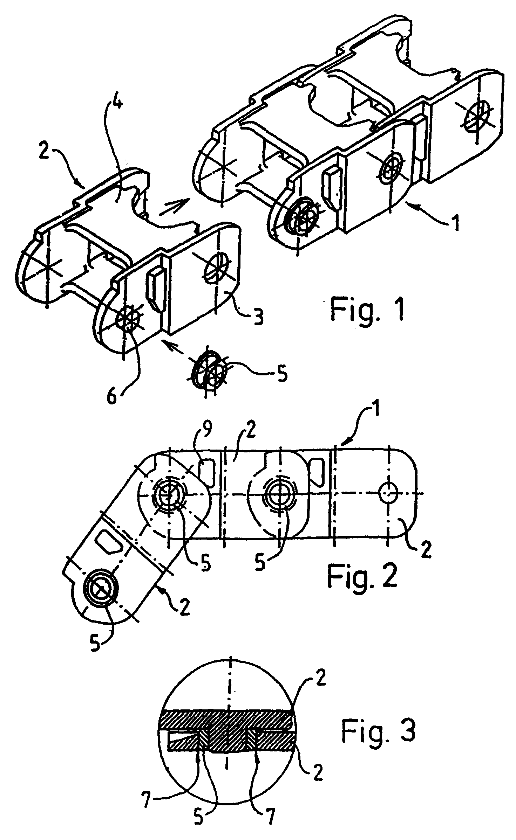

Fig. 1 zeigt eine vorteilhafte Ausführungsform, bei der eine Buchse 5 auf einen Zapfen 6 an einem Kettenglied 2 aufgesetzt wird. Das Kettenglied 2 mit zusätzlich angefügter Buchse 5 kann anschließend mit einem anderen Kettenglied 2 zu einem Teil einer Energieführungskette 1 verbunden werden. Die auf den Zapfen 6 aufgesteckte Buchse 5 kann günstigerweise durch eine Preßverbindung dauerhaft mit dem Kettenglied 2 verbunden werden. Die Preßverbindung kann so ausgelegt sein, daß die Buchse 5 bei einer späteren Entsorgung oder Auswechslung vom Kettenglied 2 wieder getrennt werden kann. Der Zapfen 6 am Kettenglied 2 ist mit diesem zusammen herstellbar. Sollten besondere Eigenschaften dieses Zapfens 6 gegenüber dem übrigen Körper des Kettengliedes 2 gewünscht werden, besteht die Möglichkeit, auch diesen dem Kettenglied zusätzlich hinzuzufügen. Die Konstruktion des Kettengliedes 2 für eine Energieführungskette 1, bestehend aus Seitenwänden 3 sowie Querstegen 4, seine Merkmale und weiteren Ausführungsmöglichkeiten sollen im weiteren nur kurz erläutert werden. Näheres findet sich z. B. in der DE-OS 1 932 428.

Fig. 2 zeigt drei miteinander verbundene Kettenglieder 2 mit jeweils zusätzlich hinzugefügten Buchsen 5. Eines der Kettenglieder 2 einer Energieführungskette 1 ist so abgewinkelt, daß es mit einer Körperkante gegen einen Anschlag 9 eines an ihm befestigten benachbarten Kettengliedes 2 anstößt. Für Kettenglieder 2 mit zusätzlich angefügten Körpern bestehen dieselben Konstruktions- sowie Einsatzmöglichkeiten wie für andere Kettenglieder 2 ohne diese.

Fig. 3 zeigt einen senkrechten Schnitt durch die aufeinander drehenden Gleitflächen 7. Die Buchse 5 ist günstigerweise so geformt, daß sie eine Art Abstandshalter zwischen den beiden miteinander verbundenen Kettengliedern 2 ausbildet. Die Entstehung von aufeinander drehenden Gleitflächen 7 bleibt damit auf jeweils ein Kettenglied 2 mit einem hinzugefügten Körper, hier einer Buchse 5, beschränkt. Ein Verschleiß durch Reibung kann dann auch nur an diesen Gleitflächen 7 auftreten.

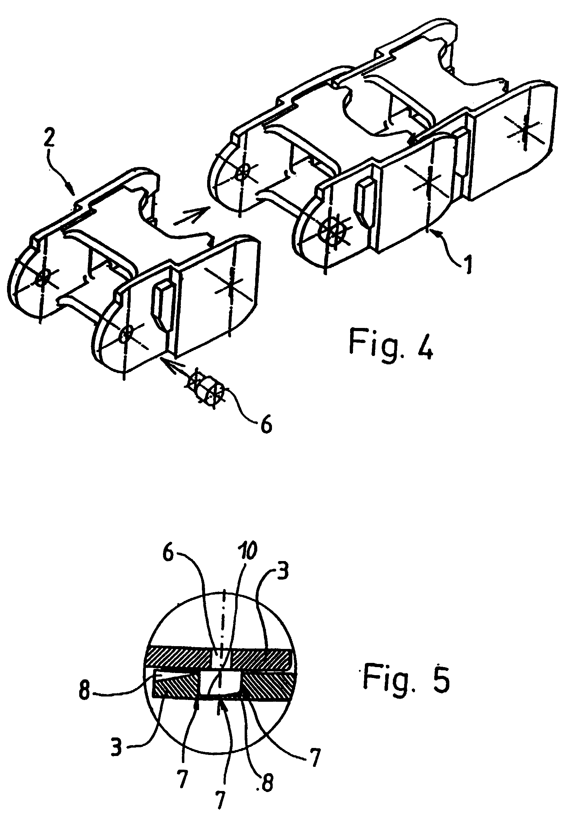

Fig. 4 zeigt eine weitere besonders günstige Ausführung eines Kettengliedes mit einem zusätzlich angefügten Körper. Dieser besitzt die Ausformung eines Zapfens 6, der in das Kettenglied 2 eingeführt wird. Der Zapfen 6 ist stufenförmig ausgeführt. Der eine Teil des Zapfens 6, der für die Verbindung zum Kettenglied 2 sorgt, kann dann entsprechend einer Preß- oder Schraubverbindung gestaltet sein. Ebenso ist es möglich, das Ende mit dem kleineren Durchmesser des Zapfens der Funktion eines Schnappverschlusses entsprechend, zu formen. Die in der Regel aufwendiger herzustellende Gleitfläche beschränkt sich bei dieser günstigen Ausführung eines Zapfens 6 auf nur einen Teil desselben. Die Herstellung eines derartigen Zapfens in einer Zwei-Kunststoff-Technik, insbesondere mit einem schmierstoffgefüllten Kunststoffabschnitt für die Gleitfläche, wäre dann vorteilhaft.

Fig. 5 zeigt einen senkrechten Schnitt durch die aufeinander drehenden Gleitflächen 7 einer Verbindung von Kettengliedern 2 untereinander aus Fig. 4. Bei dieser Ausführungsform des Kettengliedes 2 werden die aufeinander drehenden Gleitflächen 7 durch die über den Zapfen 6 überschnappende Seitenwand 3 des Kettengliedes 2 nach außen hin abgeschirmt. Schmutz, Dreck oder Flüssigkeiten können so nur erschwert zu den Gleitflächen 7 gelangen und die Reibung dort verstärken. Das Überschnappen durch Aufweiten der Seitenwände 3 des Kettengliedes 2 wird durch Anbringen entsprechender Schrägen 8 an der Seitenwand 3 aber auch am Zapfen 6 unterstützt. Die Distanz zwischen zwei Kettengliedern 2 wird durch Schaffung von gegeneinander drehenden Gleitflächen 7 zwischen dem Kopf des Zapfens 6 und dem Grund 10 der den Zapfen 6 aufnehmenden Aussparung in der Seitenwand 3 des zu verbindenden Kettengliedes 2 hergestellt. Dadurch wird ein weiterer Freiheitsgrad der Verbindung zweier Kettenglieder 2 festgelegt.

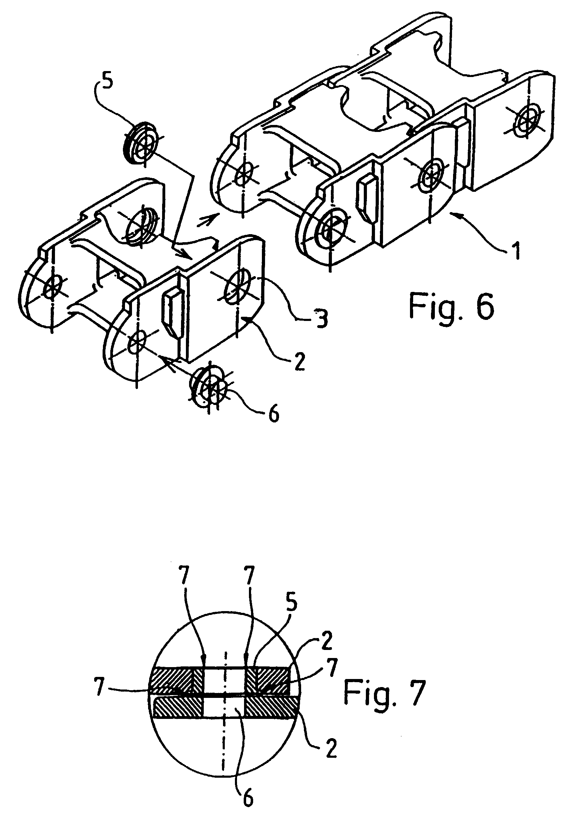

Fig. 6 zeigt eine weitere vorteilhafte Lösung der Aufgabe. Bei dieser werden dem Kettenglied 2 für eine Energieführungskette 1 insgesamt vier zusätzlich angefügte Körper eingebracht. Die zwischen zwei Kettengliedern 2 entstehenden Gleitflächen werden dann durch die in diesem Falle gewählten Formen eines Zapfens 6 sowie einer Buchse 5 geschaffen. Das Material der aufeinander drehenden Gleitfläche kann bezüglich des Verschleißes günstig gewählt werden, ohne daß das Material des Kettengliedes bezüglich seiner Reibverschleißeigenschaften einen bestimmenden Faktor für die Festigkeit der Kettenglieder ausübt. Vielmehr kann das Kettenglied nach Festigkeitsgesichtspunkten ausgelegt sein. Die Austauschbarkeit der zusätzlich angefügten Körper fördert das Baukastensystem eines Kettengliedes 2.

Fig. 7 zeigt einen senkrechten Schnitt durch die aufeinander drehenden Gleitflächen einer Verbindung von Kettengliedern untereinander aus Fig. 6. Die Reibung eines Teils des Kettengliedes 2 mit dem benachbarten Kettenglied 2 und/oder einem der zusätzlich angefügten Körper wird vermieden. Die aufeinander drehenden Gleitflächen 7 entstehen allein zwischen den zusätzlich angefügten Körpern, also dem Zapfen 6 sowie der Buchse 5. Diese beiden sind in dieser hier günstigen Ausführungsform so gestaltet, daß beide eine Stufe aufweisen. Diese dient zum einen als Anschlag beim Einsetzen in ein Kettenglied 2, zum anderen kann der Abstand zwischen den Seitenwänden 3 der Kettenglieder 2 auf diese Weise definiert werden. Ein Materialabtrag an einer der Seitenwände 3 aufgrund von Reibung kann dann nicht erfolgen.

Grundsätzlich kann das Anfügen eines Körpers an ein Kettenglied schon bei der Herstellung erfolgen, wobei für Kettenglieder aus Kunststoff insbesondere das Zwei-Komponenten-Spritzgießen in Betracht kommt, bei welchem zwei unterschiedliche Kunststoffe in einer Spritzgießmaschine verarbeitet werden.

Das Anbringen eines zusätzlichen Körpers an ein Kettenglied vor und nicht während des eigentlichen Zusammenbaus der Energieführungskette ermöglicht das unkomplizierte Zusammensetzen von Kettengliedern und unterstützt automatisierte Montageverfahren.

### BEZUGSZEICHENLISTE

- 1: Energieführungskette
- 2: Kettenglied
- 3: Seitenwand des Kettengliedes
- 4: Quersteg des Kettengliedes
- 5: Buchse
- 6: Zapfen
- 7: aufeinander drehende Gleitfläche
- 8: Schräge
- 9: Anschlag
- 10: Grund der Aussparung

## Patentansprüche

1. Verfahren zur Herstellung einer Energieführungskette (1) zur Aufnahme von Kabeln, Schläuchen und dergleichen mit Kettenglieden (2) mit langgestreckten Seitenwänden (3) und diese verbindenden Querstegen (4), wobei jede Seitenwand zur beweglichen Verbindung mit einem Seitenteil eines benachbarten Kettengliedes Gleitflächen (7) aufweist, die aufeinander gleitenden Gleitflächen (7) benachbarter Kettenglieder (2) jeweils aus unterschiedlichem Material bestehen und beweglich miteinander zu verbindende Seitenwände benachbarter kettenglieder sich teilweise überlappen,
dadurch gekennzeichnet, daß
mindestens ein Teil der Gleitflächen (7) hergestellt wird, indem vor dem Zusammenbau der Energieführungskette (1) mindestens einer Seitenwand (3) ein zusätzlicher Körper (5; 6) angefügt wird, der aus einem anderen Material als die Seitenwand (3) besteht.

2. Verfahren nach Anspruch 1, dadurch gekennzeichnet, daß als zusätzlich angefügter Körper ein Zapfen (6) und/oder eine Buchse (5) verwendet wird.

3. Verfahren nach einem der vorhergehenden Ansprüche, dadurch gekennzeichnet, daß der zusätzlich angefügte Körper ein- und/oder aufgepreßt wird.

4. Verfahren nach einem der vorhergehenden Ansprüche, dadurch gekennzeichnet, daß der angefügte Körper (5; 6) aus einem schmierstoffgefüllten Kunststoff hergestellt wird.

5. Verfahren nach einem der vorhergehenden Ansprüche 1 bis 3, dadurch gekennzeichnet, daß der angefügte Körper (5; 6) aus einem gleitstoffgefüllten Kunststoff hergestellt wird.

6. Verfahren nach einem der vorhergehenden Ansprüche 1 bis 3, dadurch gekennzeichnet, daß der angefügte Körper (5; 6) aus einem metallischen Werkstoff hergestellt wird, insbesondere aus gehärtetem Stahl.

7. Verfahren nach einem der vorhergehenden Ansprüche 1 bis 3, dadurch gekennzeichnet, daß der angefügte Körper (5; 6) aus einem keramischen Werkstoff hergestellt und/oder mit einem keramischen Werkstoff beschichtet wird.

8. Verfahren nach einem der vorhergehenden Ansprüche, dadurch gekennzeichnet, daß mindestens die Seitenwand (3) des Kettengliedes (2) aus glasfaserverstärktem Polyamid hergestellt wird.

9. Verfahren nach einem der vorhergehenden Ansprüche, dadurch gekennzeichnet, daß der angefügte Körper (5; 6) die bewegliche Verbindung zwischen zwei benachbarten Kettengliedern (2) verschließt, insbesondere verriegelt.

10. Kettenglied (2) für eine Energieführungskette (1) zur Aufnahme von Kabeln, Schläuchen und dergleichen mit langgestreckten Seitenwänden (3) und diese verbindenden Querstegen (4), wobei jede Seitenwand (3) zur beweglichen Verbindung mit einem Seitenteil eines benachbarten Kettengliedes Gleitflächen (7) aufweist, die aufeinander gleitenden Gleitflächen (7) benachbarter Kettenglieder (2) jeweils aus unterschiedlichem Material bestehen und beweglich miteinander zu verbindende Seitenwände benachbarter Kettenglieder sich teilweise überlappen,
dadurch gekennzeichnet, daß mindestens ein Teil der Gleitflächen (7) durch einen einer Seitenwand (3) vor dem Zusammenbau der Energieführungskette (1) angefügten zusätzlichen Körper (5; 6) gebildet ist, der aus einem anderen Material als das Seitenteil besteht.

11. Kettenglied (2) nach Anspruch 10, dadurch gekennzeichnet, daß der zusätzlich angefügte Körper die Form einer Buchse (5) hat, in die ein Zapfen (6) eines benachbarten Kettengliedes (2) eingreifen kann.

12. Kettenglied (2) nach Anspruch 10, dadurch gekennzeichnet, daß der zusätzlich angefügte Körper die Form eines Zapfens (6) hat, der in eine Öffnung eines benachbarten Kettengliedes (2) eingreifen kann.

13. Kettenglied (2) nach einem der Ansprüche 10, 11 oder 12, dadurch gekennzeichnet, daß der zusätzlich angefügte Körper (5; 6) ein- und/oder aufgepreßt ist.

14. Kettenglied (2) nach einem der vorhergehenden Ansprüche 10 bis 13, dadurch gekennzeichnet, daß der zusätzlich hinzugefügte Körper (5; 6) aus schmierstoffgefülltem Kunststoff besteht.

15. Kettenglied (2) nach einem der vorhergehenden Ansprüche 10 bis 13, dadurch gekennzeichnet, daß der zusätzlich hinzugefügte Körper (5; 6) aus gleitstoffgefülltem Kunststoff besteht.

16. Kettenglied (2) nach einem der vorhergehenden Ansprüche 10 bis 13, dadurch gekennzeichnet, daß der zusätzlich hinzugefügte Körper (5; 6) aus einem metallischen Werkstoff, insbesondere aus gehärtetem Stahl, besteht.

17. Kettenglied (2) nach einem der vorhergehenden Ansprüche 10 bis 13, dadurch gekennzeichnet, daß der zusätzlich hinzugefügte Körper (5; 6) aus einem keramischen Werkstoff besteht und/oder mit einem keramischen Werkstoff beschichtet ist.

18. Kettenglied (2) nach einem der vorhergehenden Ansprüche 10 bis 17, dadurch gekennzeichnet, daß mindestens die Seitenwand (3) des Kettengliedes (2) aus glasfaserverstärktem Polyamid besteht.

19. Kettenglied (2) nach einem der vorhergehenden Ansprüche 10 bis 18, dadurch gekennzeichnet, daß der angefügte Körper (5; 6) selbst mindestens einen Teil einer Verschlußvorrichtung ausformt, insbesondere in der Form eines Riegels.

## Claims

1. A process for the production of an energy guide chain (1) for receiving cables, hoses and the like comprising chain links (2) with elongated side walls (3) and transverse web portions (4) connecting same, wherein each side wall has sliding surfaces (7) for movable connection to a side portion of an adjacent chain link, the sliding surfaces (7), which slide against each other, of adjacent chain links (2) each comprise a different material, and side walls (3), which are to be movably connected to each other, of adjacent chain links partially overlapping each other, characterised in that at least a part of the sliding surfaces (7) is produced by an additional body (5; 6) which comprises a different material from the side wall (3) being attached to at least one side wall (3) prior to assembly of the energy guide chain (1).

2. A process according to claim 1 characterised in that a pin (6) and/or a bush (5) is used as the additionally attached body

3. A process according to one of the preceding claims characterised in that the additionally attached body is pressed in and/or on.

4. A process according to one of the preceding claims characterised in that the attached body (5; 6) is made from a lubricant-filled plastic material.

5. A process according to one of preceding claims 1 to 3 characterised in that the attached body (5; 6) is made from a slip-enhancing material-filled plastic material.

6. A process according to one of preceding claims 1 to 3 characterised in that the attached body (5; 6) is made from a metal material, in particular hardened steel.

7. A process according to one of preceding claims 1 to 3 characterised in that the attached body (5; 6) is made from a ceramic material and/or is coated with a ceramic material.

8. A process according to one of the preceding claims characterised in that at least the side wall (3) of the chain link (2) is made from glass fibre-reinforced polyamide.

9. A process according to one of the preceding claims characterised in that the attached body (5; 6) closes and in particular locks the movable connection between two adjacent chain links (2).

10. A chain link (2) for an energy guide chain (1) for receiving cables, hoses and the like comprising elongated side walls (3) and transverse web portions (4) connecting same, wherein each side wall (3) has sliding surfaces (7) for the movable connection to a side portion of an adjacent chain link, the sliding surfaces (7), which slide against each other, of adjacent chain links (2) each comprise a different material, and side walls (3), which are to be movably connected to each other, of adjacent chain links partially overlapping each other, characterised in that at least a part of the sliding surfaces (7) is formed by an additional body (5; 6) which comprises a different material from the side portion and which is attached to a side wall (3) prior to assembly of the energy guide chain (1).

11. A chain link (2) according to claim 10 characterised in that the additionally attached body is in the form of a bush (5) into which a pin (6) of an adjacent chain link (2) can engage.

12. A chain link (2) according to claim 10 characterised in that the additionally attached body is in the form of a pin (6) which can engage into an opening in an adjacent chain link (2).

13. A chain link (2) according to one of claims 10, 11 and 12 characterised in that the additionally attached body (5; 6) is pressed in and/or on.

14. A chain link (2) according to one of preceding claims 10 to 13 characterised in that the additionally attached body (5; 6) comprises lubricant-filled plastic material.

15. A chain link (2) according to one of preceding claims 10 to 13 characterised in that the additionally attached body (5; 6) comprises slip-enhancing material-filled plastic material.

16. A chain link (2) according to one of preceding claims 10 to 13 characterised in that the additionally attached body (5; 6) comprises a metal material, in particular hardened steel.

17. A chain link (2) according to one of preceding claims 10 to 13 characterised in that the additionally attached body (5; 6) comprises a ceramic material and/or is coated with a ceramic material.

18. A chain link (2) according to one of preceding claims 10 to 17 characterised in that at least the side wall (3) of the chain link (2) comprises glass fibre-reinforced polyamide.

19. A chain link (2) according to one of preceding claims 10 to 18 characterised in that the attached body (5; 6) itself forms at least a part of a closure means, in particular in the form of a locking member.

## Revendications

1. Procédé de fabrication d'une chaîne conductrice d'énergie (1) destinée à la réception de câbles, de tuyaux et analogues, comportant des maillons de chaîne (2) à parois latérales (3) allongées, et des entretoises transversales (4) reliant ces dernières, chaque paroi latérale comportant des surfaces de glissement (7) destinées à la liaison mobile avec une partie latérale d'un maillon de chaîne voisin, les surfaces de glissement (7) de maillons de chaîne (2) voisins glissant l'une sur l'autre étant respectivement constituées de matériaux différents, et des parois latérales de maillons de chaîne voisins à relier entre elles de façon mobile se recouvrant partiellement,
caractérisé en ce que
une partie au moins des surfaces de glissement (7) est réalisée par le fait que, avant l'assemblage de la chaîne conductrice d'énergie (1), un corps supplémentaire (5 ; 6) est rapporté sur l'une au moins des parois latérales (3), lequel est constitué d'un matériau autre que la paroi latérale (3).

2. Procédé selon la revendication 1, caractérisé en ce qu'il est utilisé un tourillon (6) et/ou une douille (5) en tant que corps supplémentaire rapporté.

3. Procédé selon l'une des revendications précédentes, caractérisé en ce que le corps supplémentaire rapporté est emmanché et/ou fixé par pression.

4. Procédé selon l'une des revendications précédentes, caractérisé en ce que le corps rapporté (5 ; 6) est fabriqué à partir d'une matière plastique remplie d'un lubrifiant.

5. Procédé selon l'une des revendications précédentes 1 à 3, caractérisé en ce que le corps rapporté (5 ; 6) est fabriqué à partir d'une matière plastique remplie d'un agent de glissement.

6. Procédé selon l'une des revendications précédentes 1 à 3, caractérisé en ce que le corps rapporté (5 ; 6) est fabriqué à partir d'un matériau métallique, notamment d'acier trempé.

7. Procédé selon l'une des revendications précédentes 1 à 3, caractérisé en ce que le corps rapporté (5 ; 6) est fabriqué à partir d'un matériau céramique et/ou est revêtu d'un matériau céramique.

8. Procédé selon l'une des revendications précédentes, caractérisé en ce qu'au moins la paroi latérale (3) du maillon de chaîne (2) est fabriquée à partir de polyamide renforcé par des fibres de verre.

9. Procédé selon l'une des revendications précédentes, caractérisé en ce que le corps rapporté (5 ; 6) ferme, notamment verrouille, la liaison mobile entre deux maillons de chaîne (2) voisins.

10. Maillon de chaîne (2) pour une chaîne conductrice d'énergie (1) destinée à la réception de câbles, de tuyaux et analogues, comportant des parois latérales (3) allongées, et des entretoises transversales (4) reliant ces dernières, chaque paroi latérale (3) comportant des surfaces de glissement (7) destinées à la liaison mobile avec une partie latérale d'un maillon de chaîne voisin, les surfaces de glissement (7) de maillons de chaîne (2) voisins glissant l'une sur l'autre étant respectivement constituées de matériaux différents, et des parois latérales de maillons de chaîne voisins à relier entre elles de façon mobile se recouvrant partiellement,
caractérisé en ce qu'une partie au moins des surfaces de glissement (7) est formée par un corps supplémentaire (5 ; 6) rapporté sur une paroi latérale (3) avant l'assemblage de la chaîne conductrice d'énergie (1), lequel est constitué d'un matériau autre que la paroi latérale.

11. Maillon de chaîne (2) selon la revendication 10, caractérisé en ce que le corps supplémentaire rapporté a la forme d'une douille (5) dans laquelle peut s'engager un tourillon (6) d'un maillon de chaîne (2) voisin.

12. Maillon de chaîne (2) selon la revendication 10, caractérisé en ce que le corps supplémentaire rapporté a la forme d'un tourillon (6) qui peut s'engager dans une ouverture d'un maillon de chaîne (2) voisin.

13. Maillon de chaîne (2) selon l'une des revendications 10, 11 ou 12, caractérisé en ce que le corps supplémentaire rapporté (5 ; 6) est emmanché et/ou fixé par pression.

14. Maillon de chaîne (2) selon l'une des revendications précédentes 10 à 13, caractérisé en ce que le corps supplémentaire rapporté (5 ; 6) est constitué de matière plastique remplie d'un lubrifiant.

15. Maillon de chaîne (2) selon l'une des revendications précédentes 10 à 13, caractérisé en ce que le corps supplémentaire rapporté (5 ; 6) est constitué de matière plastique remplie d'un agent de glissement.

16. Maillon de chaîne (2) selon l'une des revendications précédentes 10 à 13, caractérisé en ce que le corps supplémentaire rapporté (5 ; 6) est constitué d'un matériau métallique, notamment d'acier trempé.

17. Maillon de chaîne (2) selon l'une des revendications précédentes 10 à 13, caractérisé en ce que le corps supplémentaire rapporté (5 ; 6) est constitué d'un matériau céramique et/ou est revêtu d'un matériau céramique.

18. Maillon de chaîne (2) selon l'une des revendications précédentes 10 à 17, caractérisé en ce qu'au moins la paroi latérale (3) du maillon de chaîne (2) est constituée de polyamide renforcé par des fibres de verre.

19. Maillon de chaîne (2) selon l'une des revendications précédentes 10 à 18, caractérisé en ce que le corps rapporté (5 ; 6) forme lui-même au moins une partie d'un dispositif de fermeture, notamment sous la forme d'un verrou.
